# EUROPÄISCHE PATENTSCHRIFT

(11) **EP 3 271 699 B1**
(45) Veröffentlichungstag und Bekanntmachung des Hinweises auf die Patenterteilung: **26.02.2020**
(21) Anmeldenummer: 16712758.8
(22) Anmeldetag: 15.03.2016
(51) Int. Cl.: G01N 17/02

(54) **VORRICHTUNG UND VERFAHREN ZUM CHARAKTERISIEREN EINES KÜHLMITTELS**
DEVICE AND PROCESS FOR CHARACTERIZING A COOLANT
DISPOSITIF ET PROCÉDÉ POUR CARACTÉRISER UN AGENT DE REFROIDISSEMENT

(30) Priorität: 16.03.2015 DE 102015204717
(43) Veröffentlichungstag der Anmeldung: 24.01.2018
(73) Patentinhaber: VOLKSWAGEN AKTIENGESELLSCHAFT, 38440 Wolfsburg (DE)
(72) Erfinder: MATZKE, Paul, 38106 Braunschweig (DE)
(74) Vertreter: MFG Patentanwälte Meyer-Wildhagen Meggle-Freund Gerhard PartG mbB
(86) Internationale Anmeldenummer: PCT/EP2016/055536
(87) Internationale Veröffentlichungsnummer: WO 2016/146624

(56) Entgegenhaltungen:
- EP-A1- 2 775 297
- EP-A1- 3 032 245
- WO-A1-98/50786
- WO-A1-2015/019634
- DE-C1- 4 443 021
- US-A- 5 609 740
- US-A1- 2010 000 879

## Beschreibung

Die Erfindung betrifft eine Vorrichtung und ein Verfahren zum Charakterisieren eines Kühlmittels bezogen auf eine Korrosionsschutzwirkung.

Triebwerke beispielsweise von Fahrzeugen, Flugzeugen, Schiffen oder Generatoren umfassen typischerweise mindestens ein Antriebselement mit einem Kühlmittelkreis, in dem ein Kühlmittel zirkuliert, um Verlustwärme aus dem Antriebselement abzuführen. Das Kühlmittel enthält eine Mischung aus Wasser und einem Kühlmittelkonzentrat, das unter anderem Inhaltsstoffe zur Realisierung des Frost- und Korrosionsschutzes enthält.

Mit steigender Effektivität des Triebwerks erhöht sich auch die erzeugte Verlustwärme im Antriebselement. Um diese erhöhte Verlustwärme abzuführen, muss das Kühlmittel mehr Wärme aufnehmen und wird daher teilweise auf Temperaturen von über 110°C erwärmt. Bei derart hohen Temperaturen kann das Kühlmittel thermisch stark belastet werden und Inhaltsstoffe zur Realisierung des Frost- und Korrosionsschutzes können oxidieren. Dadurch wird die Qualität des Kühlmittels beeinflusst.

Um eine Beeinträchtigung einer Funktion des Triebwerks zu vermeiden, kann die Qualität des Kühlmittels mit Bezug auf dessen Korrosionsschutzwirkung regelmäßig geprüft werden und das Kühlmittel bei mangelhafter Qualität gegebenenfalls ausgetauscht werden.

Dazu wird bisher eine Kühlmittelprobe entnommen und offline durch aufwändige physikalische und/oder chemische Analysen von Einzelparametern bestimmt, ob die Korrosionsschutzwirkung des Kühlmittels noch ausreicht. Eine schnelle und zuverlässige Bestimmung der Kühlmittelqualität, die gegebenenfalls sogar direkt im Kühlmittelkreislauf erfolgt, ist bisher jedoch nicht möglich.

Auf dem Gebiet der Brennstoffzellen ist es zudem bekannt, die Kühlmittelqualität in Abhängigkeit einer elektrischen Leitfähigkeit des Kühlmittels zu bestimmen, wie es beispielsweise in der EP 1 223 631 B1 beschrieben wird. Außerdem kann eine Bestimmung der Kühlmittelqualität auch in Abhängigkeit eines Isolationswiderstands der Brennstoffzelle erfolgen.

Die Anforderungen an das Kühlmittel von Brennstoffzellen unterscheiden sich jedoch stark von den Anforderungen an das Kühlmittel in Kühlmittelkreisen von Triebwerken.

Die US 5 609 740 A, die DE 44 43 021 C1, die WO 98/50786 A1 und die US 2010/0000879 A1 beschreiben jeweils Verfahren und Vorrichtungen zum Bestimmen von Korrosionsschutzeigenschaften einer Flüssigkeit oder Korrosionseigenschaften eines Metalls mittels einer Messung eines elektrischen Potentials. Die EP 2 775 297 A1 beschreibt einen Sensor zum Erkennen einer Verschlechterung des Korrosionsschutzes in einem Heizungssystem, der fest in das Heizungssystem integriert ist und auf der Änderung einer Impedanz basiert. Die Impedanz muss daher kontinuierlich gemessen werden.

Die WO 2015/019634 A1 betrifft einen Sensor zum Erkennen einer Änderung der Korrosionseigenschaften einer Kühlflüssigkeit, der über Bypassleitungen dauerhaft mit einem Kühlkreislauf verbunden ist. Der Sensor umfasst eine Detektionselektrode und eine Gegenelektrode, die beide in einem Gehäuse angeordnet sind, das mit den Bypassleitungen verbunden ist und durch das Kühlflüssigkeit fließen kann. Zur Reinigung wird eine DC Spannung angelegt.

Aufgabe der vorliegenden Erfindung ist es, eine Vorrichtung und ein Verfahren zum Charakterisieren eines Kühlmittels bereitzustellen, die die oben genannten Nachteile wenigstens teilweise überwinden.

Diese Aufgabe wird durch die erfindungsgemäße Vorrichtung zum Charakterisieren eines Kühlmittels nach Anspruch 1 und das erfindungsgemäße Verfahren zum Charakterisieren eines Kühlmittels nach Anspruch 5 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft eine Vorrichtung zum Charakterisieren eines Kühlmittels, beispielsweise eines Kühlmittels eines Triebwerks. Das Triebwerk kann ein Triebwerk eines Fahrzeugs, Flugzeugs, Schiffs oder Generators sein. Die Vorrichtung zum Charakterisieren des Kühlmittels umfasst genau eine oder mehrere korrosionsanfällige Elektroden, genau eine oder mehrere korrosionsbeständige Elektroden, eine Spannungsquelle, ein Strommessgerät und eine Auswerteeinheit. Die Spannungsquelle ist elektrisch leitend mit der korrosionsanfälligen Elektrode und der korrosionsbeständigen Elektrode verbunden und ist dazu ausgelegt, eine Spannung bereitzustellen. Als Anode dient insbesondere die korrosionsanfällige Elektrode. Das Strommessgerät ist zum Messen eines durch die korrosionsanfällige Elektrode und die korrosionsbeständige Elektrode fließenden Stroms ausgebildet und kann beispielsweise ein Amperemeter sein. Die Auswerteeinheit ist zum Charakterisieren des Kühlmittels bezogen auf eine Korrosionsschutzwirkung auf Grundlage des durch die korrosionsanfällige Elektrode und die korrosionsbeständige Elektrode fließenden Stroms ausgelegt.

Die korrosionsanfällige Elektrode und die korrosionsbeständige Elektrode können einfach in das Kühlmittel eingebracht werden und es bedarf lediglich einer Strommessung, um auf eine Qualität des Kühlmittels schließen zu können. Der gemessene Strom ist abhängig von einer Korrosionsschutzschicht, die sich bei Kontakt der korrosionsanfälligen Elektrode mit dem Kühlmittel auf dieser bildet und die nach Anlegen der bereitgestellten Spannung zwischen die korrosionsanfällige Elektrode und die korrosionsbeständige Elektrode korrosiv belastet ist. Die erfindungsgemäße Vorrichtung zum Charakterisieren des Kühlmittels ermöglicht eine schnelle und zuverlässige Bestimmung der Qualität des Kühlmittels.

Die korrosionsanfällige Elektrode kann ein reaktionsfreudiges Material, das mit geeigneten Stoffen in seiner Umgebung mit großer Wahrscheinlichkeit eine elektrochemische Reaktion eingeht, enthalten oder aus einem solchen reaktionsfreudigen Material bestehen. Das reaktionsfreudige Material ist beispielsweise ein Metall, insbesondere ein Metall der III. oder IV. Hauptgruppe des Periodensystems, beispielsweise Aluminium (A1), oder ein Halbmetall, insbesondere ein Halbmetall der IV. Hauptgruppe des Periodensystems, beispielsweise Silizium (Si), oder eine Legierung, die ein Übergangsmetall und/oder ein Halbmetall sowie ein Metall aufweist. Die korrosionsanfällige Elektrode kann beispielsweise eine Aluminiumlegierung der Legierungsklassen 2000, 3000, 5000, 6000, 7000 nach EN573-3/4 enthalten oder daraus bestehen. Zum Beispiel kann die korrosionsanfällige Elektrode aus AICu3 oder AlCu4SiMg bestehen.

Die korrosionsbeständige Elektrode ist im Wesentlichen korrosionsbeständig und geht höchstens vereinzelt eine elektrochemische Reaktion mit Stoffen in seiner Umgebung ein. Die korrosionsbeständige Elektrode ist korrosionsbeständiger als die korrosionsanfällige Elektrode. Die korrosionsbeständige Elektrode kann ein Edelmetall oder einen Edelstahl, insbesondere eine Nickel-Chrom-Verbindung, enthalten oder daraus bestehen. Die Nickel-Chrom-Verbindung kann ein hochlegierter Chrom-Nickelstahl sein. Zum Beispiel kann die korrosionsbeständige Elektrode aus X2CrNi18-10 bestehen.

Die Vorrichtung zum Charakterisieren der Kühlflüssigkeit kann eine Referenzelektrode aufweisen, die aus einem korrosionsbeständigen Material besteht. Mittels der Referenzelektrode können Referenzströme gemessen werden und Systemfehler schnell und ohne Aufwand erkannt werden. Außerdem kann die Vorrichtung zum Charakterisieren der Kühlflüssigkeit eine oder mehrerer weitere korrosionsanfällige Elektroden aufweisen, die beispielsweise nacheinander mit Spannung versorgt werden. Dadurch kann die Genauigkeit, mit der die Qualität des Kühlmittels bestimmt wird, erhöht werden.

Die korrosionsanfällige Elektrode und die korrosionsbeständige Elektrode sind vorzugsweise in einem Abstand von einigen Millimetern zueinander angeordnet. Die korrosionsanfällige Elektrode und/oder die korrosionsbeständige Elektrode können einen kreisförmigen, ovalen oder vieleckigen Querschnitt aufweisen. Die Ausdehnung des Querschnitts der korrosionsanfälligen Elektrode liegt beispielsweise im Bereich von 0,5mm² bis 15mm², vorzugsweise im Bereich von 0,5mm² bis 6mm². Zum Beispiel kann die Ausdehnung des Querschnitts der korrosionsanfälligen Elektrode 4mm² betragen. Die Ausdehnung des Querschnitts der korrosionsbeständigen Elektrode liegt beispielsweise im Bereich von 0,5mm² bis 30mm², insbesondere im Bereich von 0,5mm² bis 15mm². Zum Beispiel kann die Ausdehnung des Querschnitts der korrosionsbeständigen Elektrode 4mm², 8mm² oder 10mm² betragen. Die Länge der korrosionsanfälligen Elektrode und/oder der korrosionsbeständigen Elektrode kann im Bereich von einigen Millimetern und wenigen Zentimetern liegen, beispielsweise 15mm betragen. Eine Kontaktfläche der korrosionsanfälligen Elektrode mit dem Kühlmittel entspricht einer Stirnseite der korrosionsanfälligen Elektrode, die eine dem Querschnitt der korrosionsanfälligen Elektrode entsprechende Form aufweist, und eine Kontaktfläche der korrosionsbeständigen Elektrode mit dem Kühlmittel entspricht einer Stirnseite der korrosionsbeständigen Elektrode, die eine dem Querschnitt der korrosionsbeständigen Elektrode entsprechende Form aufweist.

Die Spannungsquelle ist so ausgebildet, dass sie eine Spannung bereitstellt, die so ausgelegt ist, dass eine Korrosionsschicht, die sich bei einem Kontakt der korrosionsanfälligen Elektrode mit dem zu charakterisierenden Kühlmittel auf der korrosionsanfälligen Elektrode Korrosionsschutzschicht bildet, korrosiv belastet wird. Die korrosiv belastete Korrosionsschutzschicht, deren Beschaffenheit von der Korrosionsschutzwirkung des Kühlmittels abhängt, beeinflusst den gemessenen Strom zwischen der korrosionsanfälligen Elektrode und der korrosionsbeständigen Elektrode. Zum Beispiel kann die Spannung, wenn die korrosionsanfällige Elektrode aus AICu3 oder AlCu4SiMg besteht, im Bereich von 0,5V bis 3,5V absolut liegen. Bei Verwendung einer korrosionsanfälligen Elektrode aus AICu3 oder AlCu4SiMg mit einer Querschnittsausdehnung von 4mm² und einer korrosionsbeständigen Elektrode aus X2CrNi18-10 mit einer Querschnittsausdehnung von 4mm² kann die Spannung 3V absolut betragen. Bei Verwendung einer korrosionsanfälligen Elektrode aus AICu3 oder AlCu4SiMg mit einer Querschnittsausdehnung von 4mm² und einer korrosionsbeständigen Elektrode aus X2CrNi18-10 mit einer Querschnittsausdehnung von 8mm² kann die Spannung 2V absolut betragen.

Die Auswerteeinheit kann einen Prozessor zum Charakterisieren des Kühlmittels auf Grundlage des durch die korrosionsanfällige Elektrode und die korrosionsbeständige Elektrode fließenden Stroms aufweisen. Die Auswerteeinheit kann weiterhin einen Datenspeicher umfassen, in dem Parameter zum Charakterisieren des Kühlmittels hinterlegt sind.

Der Prozessor kann dazu ausgelegt sein, den gemessenen Strom mit Schwellgrößen zu vergleichen und auf Grundlage des Vergleichs einen Qualitätswert des Kühlmittels zu ermitteln. Die Schwellgrößen können beispielsweise Strombereiche oder Stromverlaufsbänder sein, denen Qualitätswerte zugeordnet sind. Die Schwellgrößen können in dem Datenspeicher hinterlegt sein.

Alternativ oder zusätzlich kann der Prozessor dazu ausgelegt sein, ein Stromrauschen des durch die korrosionsanfällige Elektrode und die korrosionsbeständige Elektrode fließenden Stroms zu ermitteln, eine Standardabweichung des Stromrauschens des durch die korrosionsanfällige Elektrode und die korrosionsbeständige Elektrode fließenden Stroms in einem vorgegebenen Fenster zu ermitteln, die Standardabweichung mit Schwellwerten zu vergleichen und auf Grundlage des Vergleichs einen Qualitätswert des Kühlmittels zu ermitteln. Das Stromrauschen kann beispielsweise durch bilden eine zeitlichen Ableitung des gemessenen Stroms erfolgen. Die Schwellwerte können beispielsweise Standardabweichungsbereiche sein, denen Qualitätswerte zugeordnet sind. Die Schwellwerte können dabei in dem Datenspeicher hinterlegt sein.

Die Auswerteeinheit kann außerdem einen Hochpassfilter zum Bestimmen eines Stromrauschens des durch die korrosionsanfällige Elektrode und die korrosionsbeständige Elektrode fließenden Stroms aufweisen. Der Prozessor kann dann dazu ausgelegt sein, eine Standardabweichung des Stromrauschens des durch die korrosionsanfällige Elektrode und die korrosionsbeständige Elektrode fließenden Stroms in einem vorgegebenen Fenster zu ermitteln, die Standardabweichung mit Schwellwerten zu vergleichen und auf Grundlage des Vergleichs einen Qualitätswert des Kühlmittels zu ermitteln.

In manchen Ausführungsbeispielen kann der Prozessor dazu ausgebildet sein, für aufeinanderfolgende Strommessungen in demselben Kühlmittel eine Standardabweichung des jeweiligen Stromrauschens zu ermitteln, jede Standardabweichung zu mitteln und eine Standardabweichung der gemittelten Standardabweichungen zu ermitteln. Diese Standardabweichung der gemittelten Standardabweichungen kann dann mit Schwellwerten verglichen werden, um daraus den Qualitätswert des Kühlmittels zu ermitteln und ein Maß für die Messunsicherheit zu erhalten.

Die Vorrichtung zum Charakterisieren des Kühlmittels kann eine Anzeigeeinheit zum Darstellen des ermittelten Qualitätswerts des Kühlmittels, beispielsweise eine Leuchtdiodenanzeige, eine Fluoreszenzanzeige oder ein Display, aufweisen.

Die Vorrichtung zum Charakterisieren des Kühlmittels weist weiterhin eine nichtleitende Ummantelung auf, die die korrosionsanfällige Elektrode und die korrosionsbeständige Elektrode bereichsweise umgibt. Die Ummantelung kann aus einem Polymermaterial, beispielsweise einem Duromer, bestehen oder ein solches enthalten. Zum Beispiel kann die Ummantelung aus einem polyesterbasierten Duromer wie Technovit® 4000 oder Technovit®4002 bestehen oder ein solches enthalten. Die Ummantelung kann zylinderförmig ausgebildet sein und einen kreisförmigen, ovalen oder vieleckigen Querschnitt aufweisen. Eine Querausdehnung des Querschnitts kann im Bereich von einigen Millimetern bis wenigen Zentimetern liegen, beispielsweise 15mm betragen. Die Länge der Ummantelung kann einige Zentimeter betragen, beispielsweise 20mm.

Die Ummantelung umgibt die korrosionsanfällige Elektrode und die korrosionsbeständige Elektrode derart, dass jeweils nur eine Stirnseite der Elektroden unbedeckt ist, um mit Kühlmittel in Kontakt gebracht zu werden. Dabei können eine Längsachse der Ummantelung und eine Längsachse jeder Elektrode parallel zueinander ausgerichtet sein und die Stirnseite der Ummantelung eine bündige Fläche mit den Stirnseiten der Elektroden ausbilden. Zudem können die Elektroden zusätzlich auf einer gegenüberliegenden Stirnseite der Ummantelung herausragen um mit einer Kontaktierung verbunden zu werden. Durch die Ummantelung kann der Abstand zwischen der korrosionsanfälligen Elektrode und der korrosionsbeständigen Elektrode fixiert werden und die Kontaktfläche zwischen korrosionsanfälliger Elektrode und korrosionsbeständiger Elektrode eindeutig definiert werden. Zudem wird durch die Ummantelung eine Entfernung der Korrosionsschutzschicht auf der korrosionsanfälligen Elektrode vereinfacht und damit eine kostengünstige Wiederverwendung der Elektroden ermöglicht.

In manchen Ausführungsbeispielen kann die Ummantelung wie ein Deckel zum Aufstecken auf einen Probenbehälter oder zum Eindrehen in den Probenbehälter oder in eine Öffnung im Kühlmittelkreis ausgebildet sein.

Die Vorrichtung zum Charakterisieren des Kühlmittels umfasst weiterhin eine Reinigungseinrichtung zum Entfernen der Korrosionsschutzschicht auf der korrosionsanfälligen Elektrode nach jedem Charakterisieren des Kühlmittels. Die Reinigungseinrichtung kann beispielsweise dazu ausgebildet sein, die Korrosionsschutzschicht durch Schleifen, Schneiden, Sägen und/oder Schaben von der korrosionsanfälligen Elektrode zu entfernen. Die Reinigungsvorrichtung kann manuell oder automatisch betrieben werden. Die Reinigungsvorrichtung kann ein Gehäuse mit einer Ausnehmung zum Aufnehmen der Ummantelung aufweisen, in der ein Sägeblatt oder ein Schleifpapier so angeordnet ist, dass die Stirnseite der Ummantelung, die bündig mit den Stirnseiten der korrosionsanfälligen Elektrode und der korrosionsbeständigen Elektrode ausgebildet ist, abgetragen werden kann. Dadurch bleibt die frei liegende Oberfläche der korrosionsanfälligen Elektrode und der korrosionsbeständigen Elektrode bzw. die Kontaktfläche der korrosionsanfälligen Elektrode und der korrosionsbeständigen Elektrode mit dem Kühlmittel erhalten und ist für eine nachfolgende Kühlmittelcharakterisierung bekannt. Alternativ kann die Reinigung der korrosionsanfälligen Elektrode chemisch erfolgen. Beispielsweise kann eine kombinierte Verwendung von konzentrierter Natriumhydroxidlösung und Schwefelsäure erfolgen, gefolgt von einem Waschprozess, beispielsweise mit Wasser.

Die Vorrichtung zum Charakterisieren des Kühlmittels kann weiterhin einen Probenbehälter mit einer Ausnehmung zum Aufnehmen eines Kühlmittels umfassen. Der Probebehälter kann zum Entnehmen von Kühlmittel aus einem Kühlmittelkreis ausgebildet sein oder in den Kühlmittelkreis integriert sein und mit dem Kühlmittelkreis in Verbindung stehen. Vorzugsweise ist der Probenbehälter so ausgebildet, dass in dem Kühlmittel keine oder nur eine vernachlässigbare Strömung herrscht. Die Ausnehmung des Probenbehälters ist beispielsweise so gestaltet, dass diese einige Milliliter des Kühlmittels aufnimmt und erlaubt, zumindest die Stirnseiten der korrosionsanfälligen Elektrode und der korrosionsbeständigen Elektrode und gegebenenfalls der Ummantelung in Kontakt mit dem Kühlmittel zu bringen.

Der Probenbehälter kann temperierbar sein, um das Kühlmittel auf eine vorgegebene Temperatur zu bringen. Die vorgegebene Temperatur kann beispielsweise im Bereich von 20°C bis 60°C liegen, beispielsweise 40°C betragen. Bei einer Temperatur von 40°C bildet sich die Korrosionsschutzschicht sehr zuverlässig, was zu verlässlichen Charakterisierungsergebnissen führt.

Die vorliegende Erfindung betrifft außerdem ein Verfahren zum Charakterisieren eines Kühlmittels, beispielsweise eines Kühlmittels eines Triebwerks. Das Verfahren zum Charakterisieren des Kühlmittels kann beispielsweise mittels einer Vorrichtung zum Charakterisieren des Kühlmittels, wie sie in den vorangehenden Abschnitten im Detail beschrieben wurde, ausgeführt werden. Das Verfahren zum Charakterisieren des Kühlmittels umfasst das Anlegen einer Spannung zwischen einer korrosionsanfälligen Elektrode und einer korrosionsbeständigen Elektrode, die in das Kühlmittel eingebracht sind, das Messen eines durch die korrosionsanfällige Elektrode und die korrosionsbeständige Elektrode fließenden Stroms und das Charakterisieren des Kühlmittels bezogen auf eine Korrosionsschutzwirkung auf Grundlage des gemessenen durch die korrosionsanfällige Elektrode und die korrosionsbeständige Elektrode fließenden Stroms.

Das erfindungsgemäße Verfahren basiert auf einfachen Mitteln wie einer Strommessung und erlaubt eine schnelle und zuverlässige Charakterisierung von Kühlmittel.

Durch das Anlegen der Spannung wird die Korrosionsschutzschicht auf der korrosionsanfälligen Elektrode korrosiv belastet. Entspricht die Spannung einem geeigneten Spannungswert, hängen die Eigenschaften der korrosiv belasteten Korrosionsschutzschicht von der Qualität des Kühlmittels ab. Die Eigenschaften der korrosiv belasteten Korrosionsschutzschicht wiederum beeinflussen den gemessenen Strom zwischen der korrosionsanfälligen Elektrode und der korrosionsbeständigen Elektrode so, dass sich Rückschlüsse auf eine Kühlmittelqualität ziehen lassen.

Der geeignete Spannungswert ist von einem Material der korrosionsanfälligen Elektrode abhängig. Beispielsweise liegt die Spannung, wie oben bereits erwähnt, im Bereich von 0,5V bis 3,5V absolut, wenn die korrosionsanfällige Elektrode aus AICu3 oder AlCu4SiMg besteht.

Das Charakterisieren des Kühlmittels kann das Vergleichen des gemessenen Stroms mit Schwellgrößen und das Ermitteln eines Qualitätswerts des Kühlmittels auf Grundlage des Vergleichs umfassen. Die Schwellgrößen können Strombereiche oder Stromverlaufsbänder sein, denen Qualitätswerte zugeordnet sind. Die Schwellgrößen und die entsprechenden Qualitätswerte können als Tabelle oder als Stromverlaufsbänder mit zughörigem Qualitätswert beispielsweise in einem Datenspeicher hinterlegt sein. Das Ermitteln des Qualitätswerts kann das Ablesen des Qualitätswerts aus der Tabelle oder das Auswählen eines Stromverlaufsbands, in dem ein gemessener Stromverlauf liegt, und das Ablesen des zu dem ausgewählten Stromverlaufsbands gehörigen Qualitätswerts enthalten.

Alternativ oder zusätzlich kann das Charakterisieren des Kühlmittels das Ermitteln eines Stromrauschens des durch die korrosionsanfällige Elektrode und die korrosionsbeständige Elektrode fließenden Stroms, das Ermitteln einer Standardabweichung des Stromrauschens des durch die korrosionsanfällige Elektrode und die korrosionsbeständige Elektrode fließenden Stroms beispielsweise in einem vorgegebenen Fenster, das Vergleichen der Standardabweichung mit Schwellwerten und das Ermitteln eines Qualitätswerts des Kühlmittels auf Grundlage des Vergleichs umfassen.

Das Ermitteln des Stromrauschens kann durch Bilden einer zeitlichen Ableitung eines gemessenen Stromverlaufs erfolgen. Alternativ kann das Ermitteln des Stromrauschens durch Filtern des gemessenen Stroms mittels eines Hochpassfilters durchgeführt werden. Die Schwellwerte können als Standardabweichungsbereiche definiert sein, denen Qualitätswerte zugeordnet sind. Die Schwellwerte und die entsprechenden Qualitätswerte können als Tabelle beispielsweise in einem Datenspeicher hinterlegt sein. Das Ermitteln des Qualitätswerts kann das Ablesen des Qualitätswerts aus der Tabelle enthalten.

Das Anlegen einer Spannung zwischen einer korrosionsanfälligen Elektrode und einer korrosionsbeständigen Elektrode, das Messen eines durch die korrosionsanfällige Elektrode und die korrosionsbeständige Elektrode fließenden Stroms, das Ermitteln eines Stromrauschens des durch die korrosionsanfällige Elektrode und die korrosionsbeständige Elektrode fließenden Stroms und das Ermitteln einer Standardabweichung des Stromrauschens des durch die korrosionsanfällige Elektrode und die korrosionsbeständige Elektrode fließenden Stroms beispielsweise in einem vorgegebenen Fenster kann für dasselbe Kühlmittel beliebig oft, beispielsweise 10 Mal, wiederholt werden. Dabei wird vor jeder Messung die Korrosionsschicht von der korrosionsanfälligen Elektrode entfernt. Jede Standardabweichung kann dann gemittelt werden und es kann eine Standardabweichung der gemittelten Standardabweichungen ermittelt werden. Diese Standardabweichung der gemittelten Standardabweichungen kann dann mit Schwellwerten verglichen werden, um daraus den Qualitätswert des Kühlmittels zu ermitteln.

Die vorliegende Erfindung betrifft weiterhin ein Triebwerk, das ein Antriebselement mit einem Kühlmittelkreislauf aufweist, in dem eine Vorrichtung zum Charakterisieren des Kühlmittels, wie sie oben im Detail beschrieben wurde, angeordnet ist. Vorzugsweise wird die Charakterisierung des Kühlmittels vorgenommen, wenn sich das Triebwerk in einem Ruhezustand befindet, in dem beispielsweise eine Temperatur im Bereich von 20°C bis 60 °C, beispielsweise 40°C, vorliegt und das Kühlmittel nicht oder nur vernachlässigbar im Kühlmittelkreis zirkuliert.

Die vorliegende Erfindung betrifft außerdem ein Fahrzeug, Flugzeug, Schiff oder einen Generator mit dem beschriebenen Triebwerk, das ein Antriebselement mit einem Kühlmittelkreis umfasst, in dem eine Vorrichtung zum Charakterisieren des Kühlmittels, wie sie oben im Detail beschrieben wurde, angeordnet ist.

Ausführungsbeispiele der Erfindung werden nun beispielhaft und unter Bezugnahme auf die beigefügten Zeichnungen beschrieben. Darin zeigen:
- Fig. 1A, 1B: eine schematische Darstellung eines ersten Ausführungsbeispiels einer erfindungsgemäßen Vorrichtung zum Charakterisieren eines Kühlmittels;
- Fig. 2A, 2B: eine schematische Darstellung eines zweiten Ausführungsbeispiels und eines dritten Ausführungsbeispiels einer erfindungsgemäßen Vorrichtung zum Charakterisieren eines Kühlmittels;
- Fig. 3: ein Flussdiagramm eines erfindungsgemäßen Verfahrens zum Charakterisieren eines Kühlmittels;
- Fig. 4: Beispiele von Stromverläufen, die für Kühlmittel unterschiedlicher Qualität aufgenommen wurden;
- Fig. 5: eine schematische Darstellung einer Auswerteeinheit in dem ersten Ausführungsbeispiel;
- Fig. 6: ein Flussdiagramm des Charakterisierens eines Kühlmittels in dem ersten Ausführungsbeispiel;
- Fig. 7: eine Tabelle zum Charakterisieren des Kühlmittels in dem ersten Ausführungsbeispiel;
- Fig. 8: ein Flussdiagramm des Charakterisierens eines Kühlmittels in einem vierten Ausführungsbeispiel;
- Fig. 9: Beispiele des Stromrauschens von Stromverläufen, die für Kühlmittel unterschiedlicher Qualität aufgenommen wurden;
- Fig. 10: eine Tabelle zum Charakterisieren des Kühlmittels in dem vierten Ausführungsbeispiel;
- Fig. 11: eine schematische Darstellung einer Auswerteeinheit in dem vierten Ausführungsbeispiel;
- Fig. 12: ein Flussdiagramm des Charakterisierens eines Kühlmittels in einem fünften Ausführungsbeispiel;
- Fig. 13: ein Flussdiagramm eines erfindungsgemäßen Verfahrens zum Charakterisieren eines Kühlmittels nach einem sechsten Ausführungsbeispiel;
- Fig. 14: eine Tabelle zum Charakterisieren des Kühlmittels in dem sechsten Ausführungsbeispiel; und
- Fig. 15A, 15B: eine schematische Darstellung eines siebten Ausführungsbeispiels einer erfindungsgemäßen Vorrichtung zum Charakterisieren eines Kühlmittels.

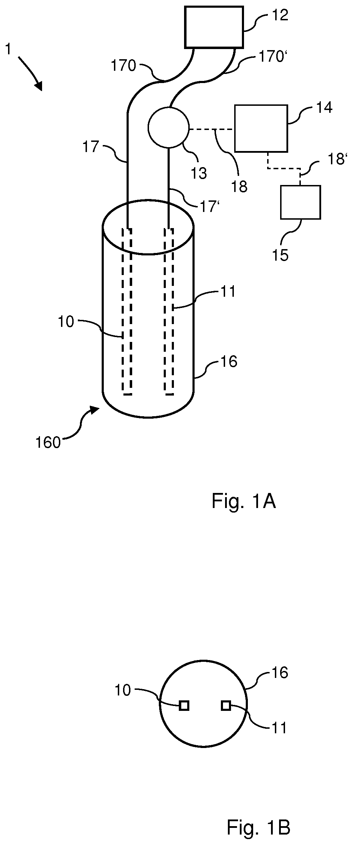

Ein erstes Ausführungsbeispiel einer Vorrichtung 1 zum Charakterisieren eines Kühlmittels ist in Fig. 1A und Fig. 1B gezeigt. Die Vorrichtung 1 enthält eine korrosionsanfällige Elektrode 10 und eine korrosionsbeständige Elektrode 11, eine Spannungsquelle 12, ein Strommessgerät 13, eine Auswerteeinheit 14 und eine Anzeigeeinheit 15.

Die korrosionsanfällige Elektrode 10 besteht aus AlCu4SiMg und die korrosionsbeständige Elektrode 11 besteht aus dem Edelstahl X2CrNi18-10. Die korrosionsanfällige Elektrode 10 und die korrosionsbeständige Elektrode 11 sind von einer kreiszylindrischen Polymerummantelung 16 so umgeben, dass eine Stirnseite der korrosionsanfälligen Elektrode 10, eine Stirnseite der korrosionsbeständigen Elektrode 11 und eine Stirnseite der Polymerummantelung 16 bündig in einer gemeinsamen Fläche liegen und eine Sensorspitze 160 ausbilden. Fig. 1B zeigt eine Draufsicht auf die Sensorspitze 160 mit den Stirnseiten der Elektroden 10, 11 und der Polymerummantelung 16. Die Ausdehnung des Querschnitts der korrosionsanfälligen Elektrode 10 und der korrosionsbeständigen Elektrode 11 beträgt jeweils 4mm².

Die korrosionsanfällige Elektrode 10 ist über eine Kontaktierung 17 und ein Kabel 170 mit der Spannungsquelle 12 verbunden. Die korrosionsbeständige Elektrode 11 ist über eine Kontaktierung 17' und ein Kabel 170' mit der Spannungsquelle 12 verbunden. Die Spannungsquelle 12 stellt eine Spannung von 3V bereit, die an der korrosionsanfälligen Elektrode 10 und der korrosionsbeständigen Elektrode 11 anliegt.

Das Strommessgerät 13 ist an das Kabel 170' angeschlossen, um einen Strom zu messen, der in Abhängigkeit einer Korrosionsschicht, die sich bei Kontakt der korrosionsanfälligen Elektrode 10 aufgrund der angelegten Spannung von 3V absolut auf der korrosionsanfälligen Elektrode 10 bildet, variiert.

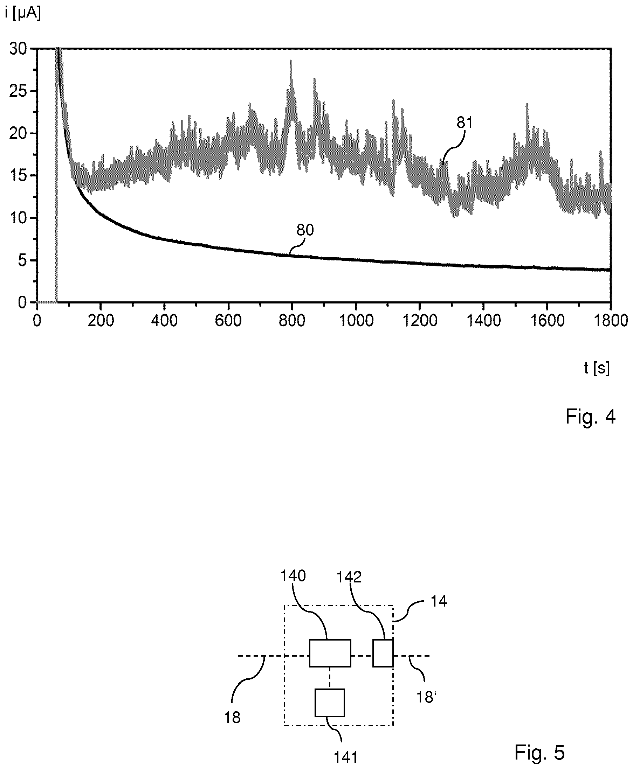

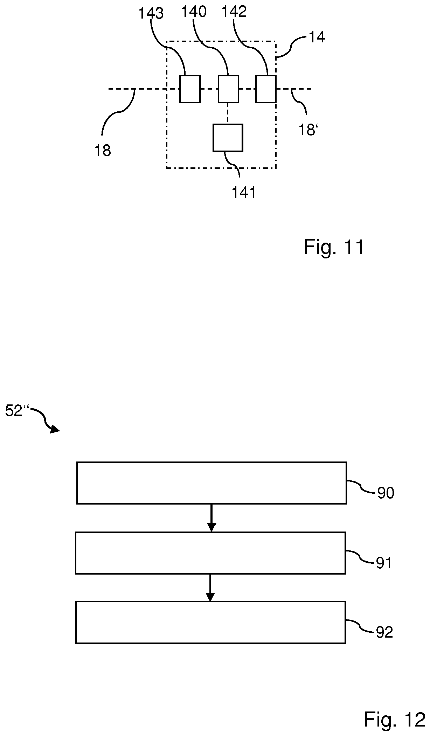

Die Auswerteeinheit 14 ist über eine Datenleitung 18 mit dem Strommessgerät 13 verbunden und dazu ausgebildet, ein für den gemessenen Strom charakteristisches Signal zu erhalten und basierend auf dem gemessenen Strom das Kühlmittel mit Bezug auf eine Korrosionsschutzwirkung auf der korrosionsanfälligen Elektrode 10 zu charakterisieren. Die Auswerteeinheit 14 wird weiter unten mit Bezug auf Fig. 5 bzw. Fig. 11 im Detail beschrieben.

Die Auswerteeinheit 14 ist weiter dazu ausgebildet, einen Qualitätswert Q_{K} des Kühlmittels zu ermitteln und auszugeben. Die Auswerteeinheit 14 ist über eine Datenleitung 18' mit einer Anzeigeeinheit 15 verbunden, um den Qualitätswert Q_{K} an die Anzeigeeinheit 15 zu übertragen, sodass diese den Qualitätswert Q_{K} anzeigt.

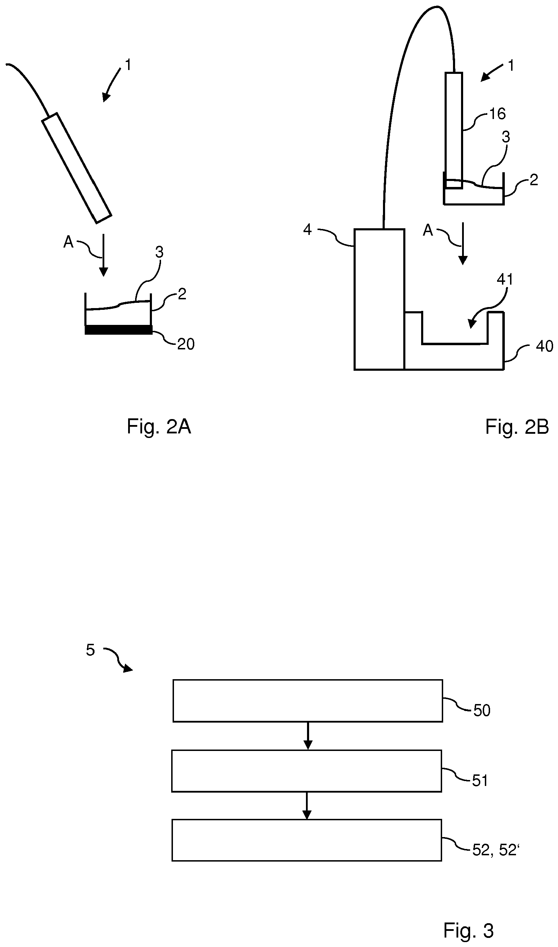

In einem zweiten Ausführungsbeispiel und einem dritten Ausführungsbeispiel weist die Vorrichtung 1 zum Charakterisieren des Kühlmittels zusätzlich zu den im ersten Ausführungsbeispiel beschriebenen Komponenten einen Probenbehälter 2 zum Aufnehmen von Kühlmittel 3 auf. In dem zweiten Ausführungsbeispiel ist der Probenbehälter 2 wie in Fig. 2A dargestellt, als separater Probenbehälter ausgebildet und umfasst eine Temperierkomponente 20 zum Temperieren des Kühlmittels 3. Zum Charakterisieren des Kühlmittels 3 in dem Probenbehälter 2 wird die Sensorspitze 160 in Richtung des Pfeils A bewegt und in das Kühlmittel 3 eingebracht.

In dem dritten Ausführungsbeispiel ist der Probenbehälter 2, wie in Fig. 2B gezeigt, fest mit der Polymerummantelung 16 verbunden, so dass die Sensorspitze 160 in einem vorbestimmten Abstand von einem Boden des Probenbehälters 2 angeordnet ist. Zum Einbringen der Sensorspitze 160 in das Kühlmittel 3 wird eine Mindestmenge an Kühlmittel 3 in den Probenbehälter 2 eingebracht. Die Elektroden 10, 11 in der Polymerummantelung 16 sind mit einer Basis 4 verbunden, die die Spannungsquelle 12, das Strommessgerät 13 und die Auswerteeinheit 14 enthält. Die Basis 4 umfasst weiterhin eine Temperiereinheit 40, die eine Aufnahmeöffnung 41 für den Probebehälter 2 aufweist. Mit dem an der Polymerummantelung 16 angebrachten Probenbehälter 2 wird Kühlmittel aus einem Kühlmittelkreis entnommen. Zum Temperieren des Kühlmittels 3 wird der Probenbehälter 2 anschließend in die Aufnahmeöffnung 41 in Richtung des Pfeils A eingelassen.

Die Vorrichtung 1 ist dazu ausgebildet, ein Verfahren 5 zum Charakterisieren von Kühlmittel, wie es nachfolgend mit Bezug auf Fig. 3 erläutert wird, durchzuführen.

Nachdem Kühlmittel 3 in den Probenbehälter 2 eingebracht ist, dieses temperiert ist und die Sensorspitze 160 in das Kühlmittel 3 eingebracht ist, wird bei 50 eine Spannung von 3V absolut an die korrosionsanfällige Elektrode 10 und die korrosionsbeständige Elektrode 11 angelegt. Dazu wird die Spannungsquelle 12 derart betrieben, dass sie eine Spannung von 3V erzeugt. Durch das Anlegen der Spannung wird eine Korrosionsschutzschicht auf der korrosionsanfälligen Elektrode 10 korrosiv belastet, wobei die Eigenschaften der korrosiv belasteten Korrosionsschutzschicht von der Qualität des Kühlmittels abhängen.

Bei 51 wird ein Strom, der durch die korrosionsanfällige Elektrode 10 und die korrosionsbeständige Elektrode 11 fließt, gemessen. Der Strom ist abhängig von den Eigenschaften der korrosiv belasteten Korrosionsschutzschicht auf der korrosionsanfälligen Elektrode 10. Zum Messen des durch die Elektroden 10, 11 fließenden Stroms bzw. des Stromverlaufs dient das Strommessgerät 13. Das Strommessgerät 13 erzeugt einen Stromverlauf des zwischen den Elektroden 10, 11 fließenden Stroms. Fig. 4 zeigt beispielhaft Stromverläufe 80, 81, die für Kühlmittel 3 unterschiedlicher Qualität aufgenommen wurden.

Bei 52 wird das Kühlmittel 3 mittels der Auswerteeinheit 14 auf Grundlage des gemessenen Stroms charakterisiert.

In dem ersten Ausführungsbeispiel weist die Auswerteeinheit 14, wie es in Fig. 5 gezeigt ist, einen Mikroprozessor 140, einen Datenspeicher 141 und einen Signalausgang 142 auf. Der Mikroprozessor 140 ist mit der Datenleitung 18 verbunden, um einen Stromverlauf, der den gemessenen Strom repräsentiert, zu empfangen. Der Mikroprozessor 140 ist weiterhin mit dem Datenspeicher 141 verbunden, in dem Vergleichswerte für eine Charakterisierung des Kühlmittels hinterlegt sind. Der Signalausgang 142 ist mit dem Mikroprozessor 140 verbunden, um ein Auswerteergebnis von dem Mikroprozessor 140 zu erhalten. Weiterhin ist der Signalausgang 142 mit der Datenleitung 18' verbunden, um das Auswerteergebnis an eine Anzeigeeinheit 15 weiterzugeben.

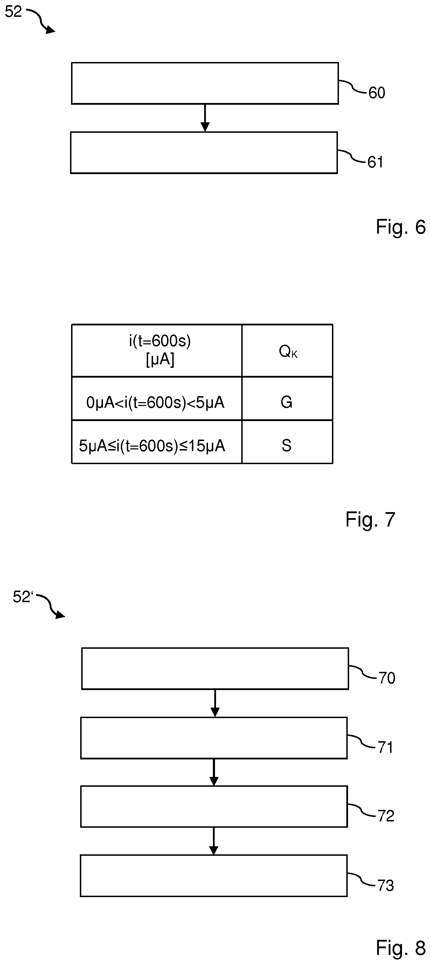

Der Mikroprozessor 140 ist dazu ausgebildet, das Charakterisieren 52 des Kühlmittels, wie es mit Bezug auf Fig. 6 nachfolgend beschrieben wird, auszuführen.

Bei 60 wird der gemessene Strom mit Schwellgrößen verglichen. Dazu wird zu einem vorgegebenen Zeitpunkt des aufgenommenen Stromverlaufs, hier 600s nach dem Start der Charakterisierung des Kühlmittels, ein Stromwert i(t=600s) abgelesen und ermittelt, ob der Stromwert i(t=600s) im Bereich von 0 µA < i(t=600s) < 7 µA oder im Bereich von 7 µA ≤ i(t=600s) ≤ 25 µA liegt.

Bei 61 wird eine Qualität des Kühlmittels ermittelt. Dazu wird eine Tabelle, wie sie in Fig. 7 dargestellt ist, herangezogen, die angibt, dass die Kühlmittelqualität Qₖ, wenn der gemessene Strom in dem Strombereich 0 µA < i(t=600s) < 7 µA liegt, gut G ist und, wenn der gemessene Strom in dem Strombereich 7 µA ≤ i(t=600s) ≤ 25 µA liegt, schlecht S ist. Liegt der Stromwert also im Bereich 0 µA < i(t=600s) < 7 µA, wie beim Stromverlauf 80 der Fig. 4, ist die Kühlmittelqualität Qₖ gut G und das Kühlmittel kann weiter im Kühlmittelkreis verwendet werden. Liegt der Stromwert im Bereich von 7 µA ≤ i(t=600s) ≤25 µA, wie beim Stromverlauf 81 der Fig. 4, ist die Kühlmittelqualität Qₖ schlecht S und das Kühlmittel muss ausgetauscht werden, um eine Korrosion innerhalb des Kühlmittelkreises zu verhindern.

In einem vierten Ausführungsbeispiel ist die Auswerteeinheit wie mit Bezug auf Fig. 5 beschrieben, ausgebildet. Der Prozessor ist jedoch dazu ausgebildet, das Charakterisieren 52' des Kühlmittels, wie es mit Bezug auf Fig. 8 nachfolgend beschrieben wird, auszuführen.

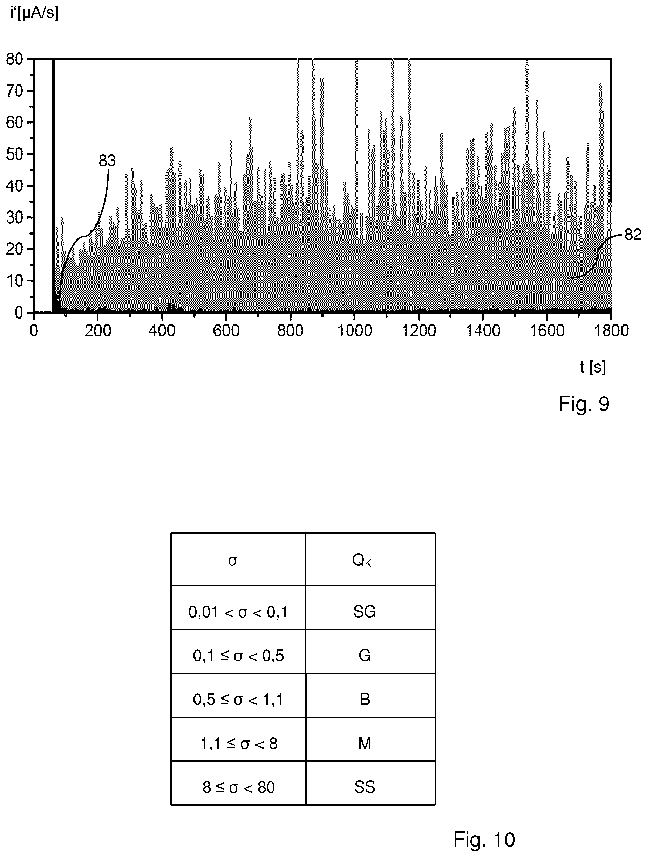

Bei 70 wird eine zeitliche Ableitung des gemessenen Stromverlaufs gebildet, um ein Stromrauschen zu erhalten. Fig. 9 zeigt beispielhaft das Stromrauschen 82, 83 des durch die Elektroden fließenden Stroms, der für unterschiedliche Kühlmittel gemessen wurde.

Bei 71 wird eine Standardabweichung des Stromrauschens bestimmt, die bei 72 mit Schwellwerten verglichen wird. Dazu wird ermittelt, ob die Standardabweichung σ im Bereich 0,01 < σ < 0,1, im Bereich 0,1 ≤ σ < 0,5, im Bereich 0,5 ≤ σ < 1,1, im Bereich 1,1 ≤ σ < 8 oder im Bereich 8 ≤ σ < 80 liegt.

Bei 73 wird eine Qualität des Kühlmittels ermittelt. Dazu wird beispielsweise eine Tabelle, wie sie in Fig. 10 dargestellt ist, herangezogen. Die Tabelle zeigt, dass eine Kühlmittelqualität Qₖ bei einer Standardabweichung von 0,01 < σ < 0,1 sehr gut SG ist, bei einer Standardabweichung von 0,1 ≤ σ < 0,5 gut G ist, bei einer Standardabweichung von 0,5 ≤ σ < 1,1 befriedigend B ist, bei einer Standardabweichung von 1,1 ≤ σ < 8 mangelhaft M ist und bei einer Standardabweichung von 8 ≤ σ < 80 sehr schlecht SS ist. Beispielsweise liegt die Standardabweichung des Stromrauschens 82, wie es in Fig. 9 gezeigt ist, im Bereich von 8 ≤ σ < 80, so dass sich eine Kühlmittelqualität sehr schlecht SS ergibt. Die Standardabweichung des Stromrauschens 83, wie es in Fig. 9 gezeigt ist, liegt dagegen im Bereich von 0,01 ≤ σ < 0,1. Daraus ergibt sich, dass die Kühlmittelqualität Qₖ sehr gut SG ist.

In einem fünften Ausführungsbeispiel weist die Auswerteeinheit 14, wie es in Fig. 11 gezeigt ist, einen Hochpassfilter 143 auf, der mit der Datenleitung 18 verbunden ist. Mit Hilfe des Hochpassfilters 143 wird der gemessene Strom gefiltert, um ein Stromrauschen zu erhalten. Die Auswerteeinheit 14 umfasst weiter einen Mikroprozessor 140, einen Datenspeicher 141 und einen Signalausgang 142. Der Mikroprozessor 140, der Datenspeicher 141 und der Signalausgang 142 sind wie mit Bezug auf Fig. 5 beschrieben angeordnet.

Der Mikroprozessor 140 ist dazu ausgebildet, das Charakterisieren 52" des Kühlmittels, wie es mit Bezug auf Fig. 12 nachfolgend beschrieben wird, auszuführen.

Bei 90 wird eine Standardabweichung des Stromrauschens bestimmt, die bei 91 mit Schwellwerten vergleichen wird. Dazu wird ermittelt, ob die Standardabweichung σ im Bereich 0,01 < σ < 0,1, im Bereich 0,1 ≤ σ < 0,5, im Bereich 0,5 ≤ σ < 1,1, im Bereich 1,1 ≤ σ < 8 oder im Bereich 8 ≤ σ < 80 liegt.

Bei 92 wird eine Qualität des Kühlmittels ermittelt. Dazu wird wieder die Tabelle, wie sie in Fig. 10 dargestellt ist, herangezogen. Beispielsweise liegt die Standardabweichung des Stromrauschens 82, wie es in Fig. 9 gezeigt ist, im Bereich von 8 ≤ σ < 80, so dass sich eine Kühlmittelqualität sehr schlecht SS ergibt. Die Standardabweichung des Stromrauschens 83, wie es in Fig. 9 gezeigt ist, liegt dagegen im Bereich von 0,01 ≤ σ < 0,1. Daraus ergibt sich, dass die Kühlmittelqualität Qₖ sehr gut SG ist.

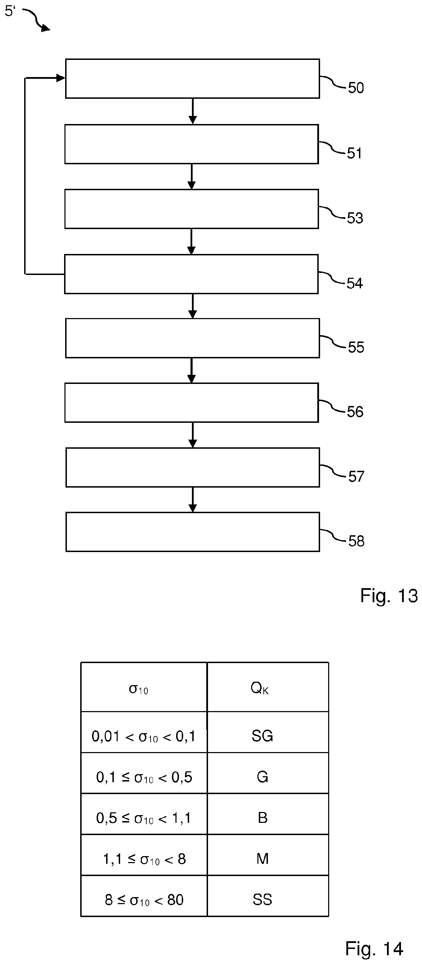

In einem sechsten Ausführungsbeispiel ist die Vorrichtung 1 zum Charakterisieren eines Kühlmittels ähnlich ausgebildet, wie in dem fünften Ausführungsbeispiel. Die Vorrichtung ist dazu ausgebildet, ein Verfahren 5' zum Charakterisieren von Kühlmittel, wie es nachfolgend mit Bezug auf Fig. 13 erläutert wird, durchzuführen.

Nachdem Kühlmittel 3 in den Probenbehälter 2 eingebracht ist, dieses temperiert ist und die Sensorspitze 160 in das Kühlmittel 3 eingebracht ist, wird bei 50 eine Spannung von 3V absolut an die korrosionsanfällige Elektrode 10 und die korrosionsbeständige Elektrode 11 angelegt, wodurch eine Korrosionsschutzschicht auf der korrosionsanfälligen Elektrode 10 korrosiv belastet wird. Bei 51 wird ein Strom, der durch die korrosionsanfällige Elektrode 10 und die korrosionsbeständige Elektrode 11 fließt, gemessen. Bei 53 wird eine zeitliche Ableitung des gemessenen Stromverlaufs gebildet, um ein Stromrauschen zu erhalten. Bei 54 wird eine Standardabweichung σ des Stromrauschens der ersten Messung bestimmt.

Nachdem die korrosiv belastete Korrosionsschutzschicht von der korrosionsanfälligen Elektrode 10 entfernt wurde und die Sensorspitze 10 wieder in das temperierte Kühlmittel 3 eingebracht ist, werden die Schritte 50, 51, 53, 54 wiederholt, um eine Standardabweichung σ des Stromrauschens einer zweiten Messung zu bestimmen. Dieses Vorgehen wird für weitere Messungen, hier die dritte bis zehnte Messung, wiederholt.

Bei 55 werden die Standardabweichungen σ der ersten bis zehnten Messung gemittelt. Bei 56 wird eine Standardabweichung σ₁₀ der gemittelten Standardabweichungen gebildet.

Bei 57 wird die Standardabweichung σ₁₀ der gemittelten Standardabweichungen mit Schwellwerten verglichen. Dazu wird ermittelt, ob die Standardabweichung σ₁₀ der gemittelten Standardabweichungen im Bereich 0,01 < σ₁₀ < 0,1, im Bereich 0,1 ≤ σ₁₀ < 0,5, im Bereich 0,5 ≤ σ₁₀ < 1,1, im Bereich 1,1 ≤ σ₁₀ < 8 oder im Bereich 8 ≤ σ₁₀ < 80 liegt.

Bei 58 wird eine Qualität des Kühlmittels ermittelt. Dazu wird eine Tabelle, wie sie in Fig. 14 dargestellt ist, herangezogen. Die Tabelle zeigt, dass eine Kühlmittelqualität Qₖ bei einer Standardabweichung σ₁₀ der gemittelten Standardabweichungen von 0,01 < σ₁₀ < 0,1 sehr gut SG ist, bei einer Standardabweichung σ₁₀ der gemittelten Standardabweichungen von 0,1 ≤ σ₁₀ < 0,5 gut G ist, bei einer Standardabweichung σ₁₀ der gemittelten Standardabweichungen von 0,5 ≤ σ₁₀ < 1,1 befriedigend B ist, bei einer Standardabweichung σ₁₀ der gemittelten Standardabweichungen von 1,1 ≤ σ₁₀ < 8 mangelhaft M ist und bei einer Standardabweichung σ₁₀ der gemittelten Standardabweichungen von 8 ≤ σ₁₀ < 80 sehr schlecht SS ist.

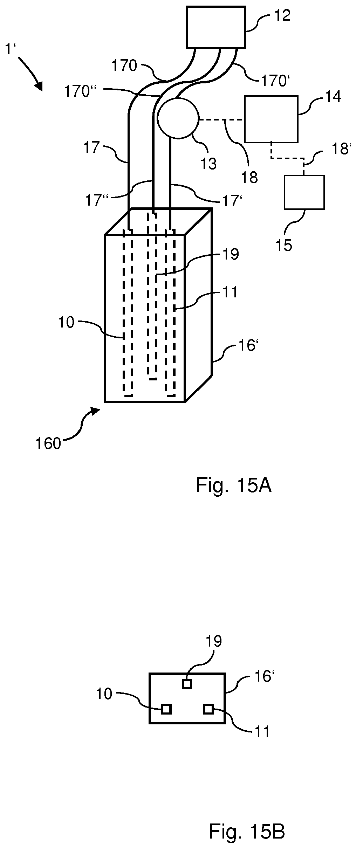

Fig. 15A und Fig. 15B zeigen ein siebtes Ausführungsbeispiel einer Vorrichtung zum Charakterisieren von Kühlmittel. Im Vergleich zu der Vorrichtung des ersten Ausführungsbeispiels enthält die Vorrichtung 1' neben der korrosionsanfälligen Elektrode 10 und der korrosionsbeständigen Elektrode 11 eine korrosionsbeständige Zusatzelektrode 19. Die korrosionsbeständige Zusatzelektrode 19 ist ebenfalls mit der Spannungsquelle 12 verbunden. Alle Elektroden 10, 11, 19 sind in eine zylinderförmige Polymerummantelung 16' eingebracht, die einen rechteckigen Querschnitt aufweist, wie insbesondere aus Fig. 15B zu sehen ist.

Die korrosionsbeständige Zusatzelektrode 19 dient als Referenzelektrode. Zwischen der korrosionsanfälligen Elektrode 10 einerseits und der korrosionsbeständigen Elektrode 11 und der korrosionsbeständigen Zusatzelektrode 19 andererseits wird eine Spannung angelegt. Da sich weder auf der korrosionsbeständigen Elektrode 11 noch auf der korrosionsbeständigen Zusatzelektrode 19 eine Korrosionsschutzschicht bildet, kann mit Hilfe der korrosionsbeständigen Zusatzelektrode 19 ein Potential über der korrosionsanfälligen Elektrode 10 so gesteuert werden, dass dieses Potential im Wesentlichen konstant ist. Ein möglichst konstantes Potential über der korrosionsanfälligen Elektrode dient dazu, dass auch kleine Ströme im Bereich einiger µA, wie sie bei der Messung des durch die korrosionsanfällige Elektrode fließenden Stroms üblicherweise auftreten, sehr genau gemessen werden können. Die korrosionsbeständige Zusatzelektrode 19 ermöglicht also eine sehr genaue Strommessung. In einem achten Ausführungsbeispiel beträgt die Ausdehnung des Querschnitts der korrosionsanfälligen Elektrode 10 4mm² und die Ausdehnung der korrosionsbeständigen Elektrode 11 im Vergleich zur Vorrichtung zum Charakterisieren eines Kühlmittels 10mm². Weiterhin beträgt die angelegte Spannung 2V absolut.

### Bezugszeichenliste

- 1,1': Vorrichtung zum Charakterisieren von Kühlmittel
- 10: korrosionsanfällige Elektrode
- 11: korrosionsbeständige Elektrode
- 12: Spannungsquelle
- 13: Strommessgerät
- 14: Auswerteeinheit
- 140: Prozessor
- 141: Datenspeicher
- 142: Signalausgang
- 143: Hochpassfilter
- 15: Anzeigeeinheit
- 16, 16': Polymerummantelung
- 160: Sensorspitze
- 17, 17', 17": elektrische Kontaktierung
- 170, 170', 170": Kabel
- 18, 18': Datenleitung
- 19: korrosionsbeständige Zusatzelektrode
- 2: Probenbehälter
- 20: Temperierkomponente des Probenbehälters
- 3: Kühlmittel
- 4: Basis
- 40: Temperiereinheit
- 41: Aufnahmeöffnung für den Probenbehälter
- 5, 5': Verfahren zum Charakterisieren des Kühlmittels
- 50: Anlegen einer Spannung
- 51: Messen eines Stroms
- 52, 52': Charakterisieren des Kühlmittels
- 53: Erhalten eines Stromrauschens
- 54: Bestimmen einer Standardabweichung σ des Stromrauschens
- 55: Mitteln der Standardabweichungen σ der ersten bis zehnten Messung
- 56: Bilden einer Standardabweichung der gemittelten Standardabweichungen
- 57: Vergleichen der Standardabweichung σ₁₀ der gemittelten Standardabweichungen mit Schwellwerten
- 58: Ermitteln einer Qualität des Kühlmittels
- 60: Vergleichen des Stroms mit Schwellgrößen
- 61: Ermitteln einer Qualität des Kühlmittels
- 70: Erhalten eines Stromrauschens
- 71: Bestimmen einer Standardabweichung
- 72: Vergleichen der Standardabweichung mit Schwellwerten
- 73: Ermitteln einer Qualität des Kühlmittels
- 80: Stromverlauf eines Kühlmittels mit guter Korrosionswirkung
- 81: Stromverlauf eines Kühlmittels mit schlechter Korrosionswirkung
- 82: Rauschen der Stromflussdichte bei sehr schlechter Korrosionswirkung
- 83: Rauschen der Stromflussdichte bei befriedigender Korrosionswirkung
- 90: Bestimmen einer Standardabweichung
- 91: Vergleichen der Standardabweichung mit Schwellwerten
- 92: Ermitteln einer Qualität des Kühlmittels
- A: Bewegungsrichtung der Sensorspitze
- i: Strom
- i': Rauschen des Stroms
- Q_{K}: Kühlmittelqualität
- σ: Standardabweichung
- σ₁₀: Standardabweichung der gemittelten Standardabweichungen
- t: Zeit

## Patentansprüche

1. Vorrichtung zum Charakterisieren eines Kühlmittels (3), umfassend:
eine korrosionsanfällige Elektrode (10);
eine korrosionsbeständige Elektrode (11), wobei die korrosionsanfällige Elektrode (10) und die korrosionsbeständige Elektrode (11) in das Kühlmittel (3) einbringbar sind;
eine Spannungsquelle (12), die elektrisch leitend mit der korrosionsanfälligen Elektrode (10) und der korrosionsbeständigen Elektrode (11) verbunden ist und dazu ausgebildet ist, eine Spannung bereitzustellen;
ein Strommessgerät (13) zum Messen eines durch die korrosionsanfällige Elektrode (10) und die korrosionsbeständige Elektrode (11) fließenden Stroms;
eine Auswerteeinheit (14) zum Charakterisieren des Kühlmittels (3) bezogen auf eine
Korrosionsschutzwirkung auf Grundlage des durch die korrosionsanfällige Elektrode (10) und die korrosionsbeständige Elektrode (11) fließenden Stroms; und
eine Reinigungseinrichtung zum Entfernen einer sich bei Kontakt der korrosionsanfälligen Elektrode (10) mit dem Kühlmittel (3) auf der korrosionsanfälligen Elektrode (11) bildenden Korrosionsschutzschicht nach jedem Charakterisieren des Kühlmittels (3),
**dadurch gekennzeichnet, dass** die Vorrichtung ferner umfasst:
eine nichtleitende Ummantelung (16), die die korrosionsanfällige Elektrode (10) und die korrosionsbeständige Elektrode (11) derart umgibt, dass jeweils nur eine Stirnseite der korrosionsanfälligen Elektrode (10) und der korrosionsbeständigen Elektrode (11) unbedeckt ist.

2. Vorrichtung nach Anspruch 1, wobei
die korrosionsanfällige Elektrode (10) ein Metall der III. oder IV. Hauptgruppe des Periodensystems enthält, insbesondere aus AICu3 oder AlCu4SiMg besteht, und/oder wobei
die korrosionsbeständige Elektrode (11) ein Edelmetall oder einen Edelstahl enthält, insbesondere aus X2CrNi18-10 besteht.

3. Vorrichtung nach Anspruch 1 oder 2, wobei
die Auswerteeinheit (14) einen Prozessor (140) zum Charakterisieren des Kühlmittels (3) auf Grundlage des durch die korrosionsanfällige Elektrode (10) und die korrosionsbeständige Elektrode (11) fließenden Stroms aufweist, oder wobei
die Auswerteeinheit (14) einen Hochpassfilter (143) zum Bestimmen eines Stromrauschens des durch die korrosionsanfällige Elektrode (10) und die korrosionsbeständige Elektrode (11) fließenden Stroms und einen Prozessor (140) zum Charakterisieren des Kühlmittels (3) auf Grundlage des Stromrauschens des durch die korrosionsanfällige Elektrode (10) und die korrosionsbeständige Elektrode (11) fließenden Stroms aufweist.

4. Vorrichtung nach einem der Ansprüche 1 bis 3, weiterhin umfassend: einen temperierbaren Probebehälter (2) zum Aufnehmen des Kühlmittels (3) und zum Temperieren des Kühlmittels (3) auf eine vorgegebene Temperatur.

5. Verfahren zum Charakterisieren eines Kühlmittels (3), umfassend:
Anlegen (50) einer Spannung zwischen einer korrosionsanfälligen Elektrode (10) und einer korrosionsbeständigen Elektrode (11), die derart von einer nichtleitenden Ummantelung (16) umgeben sind, dass jeweils nur eine Stirnseite der korrosionsanfälligen Elektrode (10) und der korrosionsbeständigen Elektrode (11) unbedeckt sind, und die in das Kühlmittel (3) eingebracht sind;
Messen (51) eines durch die korrosionsanfällige Elektrode (10) und die korrosionsbeständige Elektrode (11) fließenden Stroms;
Charakterisieren (52, 52') des Kühlmittels (3) bezogen auf eine Korrosionsschutzwirkung auf Grundlage des gemessenen durch die korrosionsanfällige Elektrode (10) und die korrosionsbeständige Elektrode (11) fließenden Stroms; und
Entfernen einer Korrosionsschutzschicht, die sich bei Kontakt der korrosionsanfälligen Elektrode (10) mit dem Kühlmittel (3) auf der korrosionsanfälligen Elektrode (10) bildet, nach jedem Charakterisieren des Kühlmittels (3).

6. Verfahren nach Anspruch 5, wobei
die angelegte Spannung von einem Material der korrosionsanfälligen Elektrode (10) abhängt, insbesondere wobei die angelegte Spannung im Bereich von 0,5V bis 3,5V absolut beträgt, wenn die korrosionsanfällige Elektrode (10) aus AICu3 oder AlCu4SiMg besteht.

7. Verfahren nach Anspruch 5 oder 6, wobei das Charakterisieren (52) des Kühlmittels (3) umfasst:
Vergleichen (60) des gemessenen Stroms mit Schwellgrößen; und
Ermitteln (61) eines Qualitätswerts des Kühlmittels (3) auf Grundlage des Vergleichs.

8. Verfahren nach einem der Ansprüche 5 bis 7, wobei das Charakterisieren (52') des Kühlmittels (3) umfasst:
Ermitteln (70) eines Stromrauschens des durch die korrosionsanfällige Elektrode (10) und die korrosionsbeständige Elektrode (11) fließenden Stroms;
Ermitteln (71) einer Standardabweichung des Stromrauschens des durch die korrosionsanfällige Elektrode (10) und die korrosionsbeständige Elektrode (11) fließenden Stroms in einem vorgegebenen Fenster;
Vergleichen (72) der Standardabweichung mit Schwellwerten; und
Ermitteln (73) eines Qualitätswerts des Kühlmittels (3) auf Grundlage des Vergleichs.

## Claims

1. Device for characterizing a coolant (3), comprising:
a corrosion-susceptible electrode (10);
a corrosion-resistant electrode (11), wherein the corrosion-susceptible electrode (10) and the corrosion-resistant electrode (11) can be introduced into the coolant (3);
a voltage source (12) connected in an electrically conductive manner to said corrosion-susceptible electrode (10) and said corrosion-resistant electrode (11) and designed to provide a voltage;
a current measuring device (13) for measuring a current flowing through the corrosion-susceptible electrode (10) and the corrosion-resistant electrode (11);
an evaluation unit (14) for characterizing the coolant (3) in relation to a corrosion protection effect on the basis of the current flowing through the corrosion-susceptible electrode (10) and the corrosion-resistant electrode (11); and
a cleaning device for removing, after each characterization of the coolant (3), a corrosion protection layer that forms on the corrosion-susceptible electrode (11) when the corrosion-susceptible electrode (10) contacts the coolant (3),
**characterized in that** the device further comprises:
a non-conductive sheathing (16) surrounding the corrosion-susceptible electrode (10) and the corrosion-resistant electrode (11) in such a way that in each case only one end face of the corrosion-susceptible electrode (10) and of the corrosion-resistant electrode (11) is uncovered.

2. Device according to claim 1, wherein
the corrosion-susceptible electrode (10) contains a metal of the third or fourth main group of the periodic system, in particular consists of AICu3 or AlCu4SiMg, and/or wherein
the corrosion-resistant electrode (11) contains a precious metal or a stainless steel, in particular consists of X2CrNi18-10.

3. Device according to claim 1 or 2, wherein
the evaluation unit (14) has a processor (140) for characterizing the coolant (3) on the basis of the current flowing through the corrosion-susceptible electrode (10) and the corrosion-resistant electrode (11), or wherein
the evaluation unit (14) has a high-pass filter (143) for determining a current noise of the current flowing through the corrosion-susceptible electrode (10) and the corrosion-resistant electrode (11) and a processor (140) for characterizing the coolant (3) on the basis of the current noise of the current flowing through the corrosion-susceptible electrode (10) and the corrosion-resistant electrode (11).

4. Device according to any of claims 1 to 3, further comprising:
a temperature-controllable sample container (2) for receiving the coolant (3) and for bringing the coolant (3) to a predetermined temperature.

5. Process for characterizing a coolant (3), comprising:
applying (50) a voltage between a corrosion-susceptible electrode (10) and a corrosion-resistant electrode (11) which are surrounded by a non-conductive sheathing (16) in such a way that in each case only one end face of the corrosion-susceptible electrode (10) and of the corrosion-resistant electrode (11) are uncovered and which are introduced into the coolant (3);
measuring (51) a current flowing through the corrosion-susceptible electrode (10) and the corrosion-resistant electrode (11);
characterizing (52, 52') the coolant (3) in relation to a corrosion protection effect on the basis of the measured current flowing through the corrosion-susceptible electrode (10) and the corrosion-resistant electrode (11); and
removing, after each characterization of the coolant (3), a corrosion protection layer that forms on the corrosion-susceptible electrode (10) when the corrosion-susceptible electrode (10) contacts the coolant (3).

6. Process according to claim 5, wherein
the applied voltage depends on a material of the corrosion-susceptible electrode (10), in particular wherein the applied voltage is within the absolute range of 0.5 V to 3.5 V when the corrosion-susceptible electrode (10) consists of AICu3 or AlCu4SiMg.

7. Process according to claim 5 or 6, wherein the characterization (52) the coolant (3) comprises:
comparing (60) the measured current with thresholds; and
determining (61) a quality value of the coolant (3) on the basis of the comparison.

8. Process according to any of claims 5 to 7, wherein the characterization (52') of the coolant (3) comprises:
determining (70) a current noise of the current flowing through the corrosion-susceptible electrode (10) and the corrosion-resistant electrode (11);
determining (71) a standard deviation of the current noise of the current flowing through the corrosion-susceptible electrode (10) and the corrosion-resistant electrode (11) in a predetermined window;
comparing (72) the standard deviation to threshold values; and
determining (73) a quality value of the coolant (3) on the basis of the comparison.

## Revendications

1. Dispositif pour caractériser un agent de refroidissement (3), comprenant :
une électrode sensible à la corrosion (10) ;
une électrode résistant à la corrosion (11), l'électrode sensible à la corrosion (10) et l'électrode résistant à la corrosion (11) pouvant être introduites dans l'agent de refroidissement (3) ;
une source de tension (12) reliée de manière électriquement conductrice à l'électrode sensible à la corrosion (10) et à l'électrode résistant à la corrosion (11) et conçue pour fournir une tension ;
un ampèremètre (13) permettant de mesurer un courant circulant à travers l'électrode sensible à la corrosion (10) et à travers l'électrode résistant à la corrosion (11) ;
une unité d'évaluation (14) permettant de caractériser l'agent de refroidissement (3) quant à son action de protection contre la corrosion sur la base du courant circulant à travers l'électrode sensible à la corrosion (10) et à travers l'électrode résistant à la corrosion (11); et
un dispositif de nettoyage permettant d'éliminer, après chaque caractérisation de l'agent de refroidissement (3), une couche de protection contre la corrosion qui se forme sur l'électrode sensible à la corrosion (11) lors du contact de l'électrode sensible à la corrosion (10) avec l'agent de refroidissement (3),
**caractérisé en ce que** le dispositif comprend en outre :
une enveloppe non conductrice (16) entourant l'électrode sensible à la corrosion (10) et l'électrode résistant à la corrosion (11) de sorte que seule une face avant de l'électrode sensible à la corrosion (10) et de l'électrode résistant à la corrosion (11) soit laissée à découvert.

2. Dispositif selon la revendication 1,
l'électrode sensible à la corrosion (10) contenant un métal du groupe principal III ou IV du système périodique et étant constituée en particulier d'AlCu3 ou d'AlCu4SiMg et/ou
l'électrode résistant à la corrosion (11) contenant un métal noble ou un acier inoxydable et étant constituée en particulier de X2CrNi18-10.

3. Dispositif selon la revendication 1 ou 2,
l'unité d'évaluation (14) comprenant un processeur (140) permettant de caractériser l'agent de refroidissement (140) sur la base du courant circulant à travers l'électrode sensible à la corrosion (10) et à travers l'électrode résistant à la corrosion (11) ; et
l'unité d'évaluation (14) comprenant un filtre passe-haut (143) permettant de déterminer un bruit du courant circulant à travers l'électrode sensible à la corrosion (10) et à travers l'électrode résistant à la corrosion (11) et un processeur (140) permettant de caractériser l'agent de refroidissement (140) sur la base du bruit du courant circulant à travers l'électrode sensible à la corrosion (10) et à travers l'électrode résistant à la corrosion (11).

4. Dispositif selon l'une quelconque des revendications 1 à 3, comprenant en outre :
un récipient à échantillons à température réglable (2) permettant de recevoir l'agent de refroidissement (3) et de réguler la température de l'agent de refroidissement (3) à une température prédéterminée.

5. Procédé pour caractériser un agent de refroidissement (3), comprenant :
l'application (50) d'une tension entre une électrode sensible à la corrosion (10) et une électrode résistant à la corrosion (11), qui sont entourées d'une enveloppe non conductrice (16) de sorte que seule une face avant de l'électrode sensible à la corrosion (10) et de l'électrode résistant à la corrosion (11) soit laissée à découvert et qui sont introduites dans l'agent de refroidissement (3) ;
la mesure (51) d'un courant circulant à travers l'électrode sensible à la corrosion (10) et à travers l'électrode résistant à la corrosion (11) ;
la caractérisation (52, 52') de l'agent de refroidissement (3) quant à son action de protection contre la corrosion sur la base du courant mesuré circulant à travers l'électrode sensible à la corrosion (10) et à travers l'électrode résistant à la corrosion (11) ; et
l'élimination, après chaque caractérisation de l'agent de refroidissement (3), d'une couche de protection contre la corrosion qui se forme sur l'électrode sensible à la corrosion (10) lors du contact de l'électrode sensible à la corrosion (10) avec l'agent de refroidissement (3).

6. Procédé selon la revendication 5,
la tension appliquée dépendant d'un matériau de l'électrode sensible à la corrosion (10), en particulier la tension appliquée se trouvant dans la plage allant de 0,5 V à 3,5 V absolus lorsque l'électrode sensible à la corrosion (10) est constituée d'AlCu3 ou d'AlCu4SiMg.

7. Procédé selon la revendication 5 ou 6, la caractérisation (52) de l'agent de refroidissement (3) comprenant :
la comparaison (60) du courant mesuré à des valeurs seuil ; et
la détermination (61) d'une valeur de qualité de l'agent de refroidissement (3) sur la base de la comparaison.

8. Procédé selon l'une quelconque des revendications 5 à 7, la caractérisation (52') de l'agent de refroidissement (3) comprenant :
la détermination (70) d'un bruit du courant circulant à travers l'électrode sensible à la corrosion (10) et à travers l'électrode résistant à la corrosion (11) ;
la détermination (71) d'un écart-type du bruit du courant circulant à travers l'électrode sensible à la corrosion (10) et à travers l'électrode résistant à la corrosion (11) dans une fenêtre prédéterminée ;
la comparaison (72) de l'écart-type à des valeurs seuil ; et
la détermination (73) d'une valeur de qualité de l'agent de refroidissement (3) sur la base de la comparaison.
